# EUROPÄISCHE PATENTSCHRIFT

(11) **EP 0 206 309 B1**
(45) Veröffentlichungstag und Bekanntmachung des Hinweises auf die Patenterteilung: **27.01.1993**
(21) Anmeldenummer: 86108572.8
(22) Anmeldetag: 24.06.1986
(51) Int. Cl.: B29B 7/24, B29B 7/28

(54) **Giessanlage für die Verarbeitung von Giessharz**
Casting apparatus for processing resin
Dispositif de coulage pour traitement de résine

(30) Priorität: 27.06.1985 DE 3522922
(43) Veröffentlichungstag der Anmeldung: 30.12.1986
(73) Patentinhaber: Wilhelm Hedrich Vakuumanlagen GmbH & Co.KG, D-35630 Ehringshausen (DE)
(72) Erfinder: Häuser, Erhard, D-6331 Schöffengrund (DE); Duchscherer, Frank, D-6334 Asslar-Werdorf (DE)
(74) Vertreter: Patentanwälte Dipl.-Ing. R. Schlee Dipl.-Ing. A. Missling

(56) Entgegenhaltungen:
- DE-A- 1 966 542
- DE-A- 2 118 744
- DE-A- 3 411 165
- GB-A- 2 526

## Beschreibung

Die Erfindung bezieht sich auf eine Gießanlage für die Verarbeitung von Gießharz, mit mindestens zwei, vorzugsweise evakuierbaren Vorratsbehältern für Gießharzkomponenten, den Vorratsbehältern zugeordneten Dosierpumpen, einem den Dosierpumpen nachgeordneten Mischer und Umwälzeinrichtungen zum Umwälzen der Gießharzkomponenten in den Vorratsbehältern, wobei die Umwälzpumpe in einen Umwälzkreislauf des zugeordneten Vorratsbehälters eingebaut ist.

Gießanlagen dieser Art sind aus der DE-Offenlegungsschrift 19 66 542 bekannt und haben den Vorteil, daß die Komponenten durch Umwälzung für die weitere Verarbeitung gut vorbereitet werden. Durch die Umwälzung erfolgt eine ständige Durchmischung der Massen, wobei eventuelle Füllstoffe in der Schwebe gehalten werden und, im Falle evakuierter Vorratsbehälter, eine gute Entgasung stattfindet. Die Durchmischung bewirkt eine allgemeine Homogenisierung der Komponenten, z.B. auch eine gleichmäßige Temperatur. Dabei werden für die Verarbeitung mehrerer Komponenten, die in einem Mischer zusammengeführt werden müssen, für die Umwälzung der Massen in den Vorratsbehältern besondere Fördereinrichtungen verwendet. Jedem Vorratsbehälter ist eine Dosierpumpe nachgeschaltet, mit der die in dem zugeordneten Behälter enthaltene Komponente einem Mischer zugemessen wird. Sowohl die Umwälzeinrichtungen als auch die Dosierpumpen haben eigene Antriebe, so daß die bekannten Gießanlagen baulich aufwendig und damit auch teuer sind. Außerdem muß in dem Mischer eine intensive Durchmischung der Komponenten vorgenommen werden, weil die Dosierung lediglich der Menge nach erfolgt, so daß ein recht komplizierter Mischer vorgesehen sein muß.

Aber auch durch die Verwendung von Vorrichtungen gemäß der DE-Offenlegungsschrift 34 11 165 statt der einfachen Vorratsbehälter kann man eine Verbesserung der Anordnung nicht erreichen. Zwar könnten die in der DE-Offenlegungsschrift 19 66 542 benötigten zusätzlichen Dosierpumpen entfallen, weil auch so ein dosierter Austrag realisierbar ist. Es ist aber dann ein teurer Mischer erforderlich, weil der in der DE-Offenlegungsschrift 19 66 542 vorgesehene Antrieb für die Dosier- und Mischeinrichtung nicht geeignet ist, eine Dosierung so zu steuern, daß die beiden Komponenten aus den Vorratsbehältern dem Mischer zu jedem Zeitpunkt immer in einem konstant-vorgegebenen Verhältnis zugeführt werden.

Der Erfindung liegt die Aufgabe zugrunde, eine Gießanlage der eingangs genannten Art so auszubilden, daß der Bauaufwand verringert wird.

Diese Aufgabe wird nach der Erfindung dadurch gelöst, daß mindestens einem Vorratsbehälter ein Pumpenaggregat zugeordnet ist, das eine Kolbenstange aufweist, auf der ein erster Kolben einer Umwälzpumpe und ein zweiter Kolben einer Dosierpumpe sitzt, daß alle Pumpenaggregate über eine Antriebsvorrichtung betätigbar sind, die derart ausgelegt ist, daß die Förderbewegung der Kolbenstangen synchron erfolgt, und daß der Mischer als Durchlaufmischer ausgelegt ist.

Bei einer so ausgebildeten Gießanlage ist nur ein Antrieb erforderlich, mit dem sowohl die Umwälzung der Massekomponenten in Gang gehalten wird als auch die Dosierung der Komponenten erfolgt. Dadurch wird der Bauaufwand wesentlich reduziert.

Es ist sowohl möglich, das Pumpaggregat im Inneren des jeweiligen Vorratsbehälters anzuordnen (Anspruch 2) als auch eine externe Anordnung des Pumpaggregates (Anspruch 3). Falls mehrere Pumpaggregate vorhanden sind, wie dies in der Regel der Fall ist, sind diese vorzugsweise synchron betätigbar (Anspruch 4). Die synchrone Betätigung ermöglicht insbesondere die Verwendung eines Statikmischers, also eines Mischers, der besonders funktionssicher ist.

Die Pumpenaggregate sind vorzugsweise gemäß Anspruch 5 ausgebildet. Auch andere Konstruktionen sind möglich, z.B. Konstruktionen mit Ventilen. Eine ventillose Ausbildung nach Anspruch 5 hat den besonderen Vorteil, daß sie besonders gut für die Verarbeitung zähflüssiger Massen geeignet ist, die eventuell abrasive Füllstoffe enthalten.

Die im Anspruch 5 angegebene Grundkonstruktion kann in verschiedenen Varianten ausgeführt werden. Beispielsweise kann die Masse gemäß Anspruch 6 durch den ersten Kolben hindurchgeführt und oberhalb dieses Kolbens nach oben gefördert werden. Hierbei kann gemäß Anspruch 7 die Förderung durch die hohl ausgebildete Kolbenstange erfolgen. Diese Ausführung eignet sich gut für innerhalb der Vorratsbehälter angeordnete Pumpaggregate, ist jedoch auch bei extern angeordneten Pumpaggregaten möglich mit einer Konstruktion nach Anspruch 8. Die Masse kann auch durch den Kolben selber angehoben werden (Anspruch 9), wobei im Durchbruch ein Rückschlagventil angeordnet ist.

Die Umwälzung gestattet insbesondere auch die Ausbreitung der Massen zu dünnen Schichten, aus denen in der Masse eingeschlossene Gase besonders leicht entweichen können. Es sollen deshalb vorzugsweise Mittel für eine solche Ausbreitung vorgesehen werden (Anspruch 10). Zur Verhinderung eines Absetzens von Füllstoffen haben die Vorratsbehälter vorzugsweise abfallende Böden (Anspruch 11).

Gemäß einer Weiterbildung der Erfindung sind in den Vorratsbehältern Stützen für Masse-Verpackungsbehälter angeordnet (Anspruch 12). Dies hat den Vorteil, daß die Verpackungsbehälter zwecks Auslaufens der in ihnen enthaltenen Masse in den Vorratsbehältern untergebracht werden können. Dadurch ist eine bequeme und vollständige Entleerung der Verpackungsbehälter möglich. Die Stützen können als Roste ausgebildet sein.

Vorteilhaft sind haubenartige Deckel an den Vorratsbehältern (Anspruch 14). Dadurch ist das Einbringen und Entnehmen der Verpackungsbehälter besonders bequem möglich. Zur leichten Öffnung und Schließung der Behälter sind die Deckel vorzugsweise an schwenkbaren Armen aufgehängt (Anspruch 15). Einer vollständigen und auch raschen Entleerung ist dienlich, wenn im Bereich oberhalb der Stützen für die Verpackungsbehälter eine Heizeinrichtung vorgesehen ist (Anspruch 16).

Die Pumpaggregate sind vorzugsweise individuell steuerbar. Dies ermöglicht es z. B., einen Durchlaufmischer mit einer einzelnen, also nicht aktivierten, Komponente zu spülen.

In der Zeichnung sind Ausführungsbeispiele der Erfindung schematisch dargestellt. Es zeigen:
- Fig. 1: eine Gießanlage mit zwei Vorratsbehältern, wobei die Pumpaggregate innerhalb der Behälter angeordnet sind,
- Fig. 2: eine Gießanlage mit zwei Behältern, denen außerhalb der Behälter angeordnete Pumpaggregate zugeordnet sind und
- Fig. 3: den unteren Teil eines Vorratsbehälters und ein an den Behälter außen angebautes Pumpaggregat gemäß einer weiteren Ausführungsform der Erfindung.

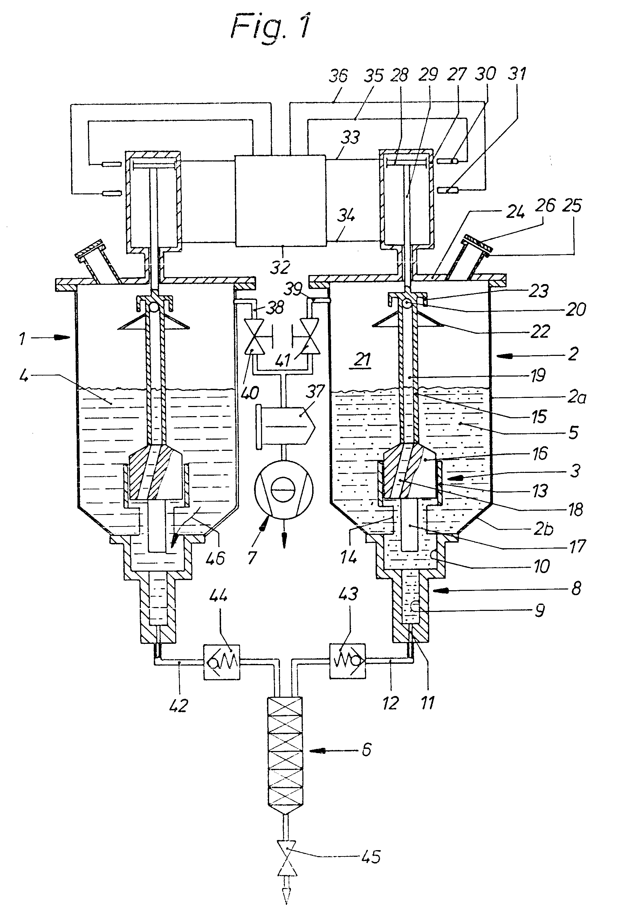

Die Gießanlage nach Fig. 1 hat zwei gleich ausgebildete Vorratsbehälter 1 und 2. Innerhalb jedes Vorratsbehälters ist ein Pumpaggregat 3 angeordnet, das zugleich eine Dosierpumpe bildet. Die Dosierpumpen der Pumpaggregate 3 fördern in den Vorratsbehältern 1, 2 enthaltene Komponentenmassen 4, 5 zu einem Mischer 6. Die Vorratsbehälter 1, 2 sind evakuierbar mittels einer Vakuumpumpe 7.

Da die Behälter 1, 2 und die in ihnen angeordneten Pumpaggregate 3 gleich ausgebildet sind, genügt die nachfolgende Betrachtung des Vorratsbehälters 2 und des darin angeordneten Pumpaggregates. Der Vorratsbehälter 2 hat einen zylindrischen Mantel 2a und einen kegeligen Boden 2b. An den Boden 2b ist ein Pumpengehäuse 8 angeflanscht. Das Pumpengehäuse enthält eine untere Zylinderbohrung 9 und eine obere Zylinderbohrung 10, deren Durchmesser größer ist als der Durchmesser der Zylinderbohrung 9. Vom Boden der Zylinderbohrung 9 geht eine Abflußöffnung 11 aus, an die eine Leitung 12 angeschlossen ist.

Mit dem Pumpengehäuse 8 ist eine Kolbenführung 13 verbunden, die große seitliche Fenster 14 für den Zutritt von Komponentenmasse 5 aufweist.

Das Pumpaggregat hat eine Kolbenstange 15, an deren unterem Ende ein erster Kolben 16 und ein zweiter Kolben 17 sitzt. Der zweite Kolben 17 paßt in die untere Zylinderbohrung 9 und der erste Kolben 16 in die obere Zylinderbohrung 10. Im ersten Kolben 16 befindet sich ein Kanal 18, der an der Unterseite des Kolbens 16 ausmündet und oben in einen Hohlraum 19 übergeht, der sich innerhalb der Kolbenstange 15 befindet. Der Hohlraum 19 steht über Durchbrüche 20 mit dem Behälterraum 21 in Verbindung. Unterhalb der Durchbrüche 20 ist an der Kolbenstange 15 ein kegelförmiges Ablaufblech 22 montiert. Die Durchbrüche 20 sind nach oben durch einen Schirm 23 abgeschirmt, der auch zur gleichmäßigen Verteilung des Materials auf dem Schirm dient.

Der Behälter ist mit einem Deckel 24 verschlossen, der luftdicht auf den Behälter aufgesetzt ist. Am Deckel befindet sich ein Füllstutzen 25 zum Einfüllen von Komponentenmasse 5. Der Füllstutzen 25 ist mit einem Deckel 26 verschlossen, in dem sich eventuell ein Schauglas befinden kann.

Auf den Deckel 24 ist ein Druckmittelzylinder 27, z. B. ein Hydraulikzylinder, aufgesetzt. Im Druckmittelzylinder 27 ist ein Antriebskolben 28 gleitbar, der mit einer Kolbenstange 29 verbunden ist, die ihrerseits fest mit der Kolbenstange 15 verbunden ist. Dem Druckmittelzylinder 27 ist ein oberer Endschalter 30 und ein unterer Endschalter 31 zugeordnet.

Zur Beaufschlagung des Druckmittelzylinders 27 mit Druckmittel dient eine insgesamt mit 32 bezeichnete Antriebseinrichtung. Von dieser gehen Druckmittelleitungen 33, 34 aus, die oben bzw. unten in den doppelt wirkenden Druckmittelzylinder 27 einmünden. Die Endschalter 30, 31 sind über Steuerleitungen 35, 36 mit der Antriebseinrichtung 32 verbunden.

Der Vakuumpumpe 7 ist ein Abscheider 37 vorgeschaltet. Die Vorratsbehälter 1, 2 sind über Saugleitungen 38, 39 an die Vakuumpumpe 7 angeschlossen. In die Saugleitungen 38, 39 sind Ventile 40, 41 eingebaut.

Beide Dosierpumpen, bestehend aus dem zweiten Kolben 17 und der unteren Zylinderbohrung 9 sind über Leitungen 12 bzw. 42 an den vorzugsweise als Statikmischer ausgebildeten Mischer 6 angeschlossen. In die Leitungen 12, 42 sind Rückschlagventile 43, 44 eingebaut, die eine Strömung nur zum Mischer 6 hin zulassen und in der entgegengesetzten Richtung absperren. Am Ausgang des Statikmischers 6 befindet sich ein Gießventil 45. Das Gießventil 45 könnte auch in einer Vakuumkammer liegen.

Die Anlage nach Fig. 1 arbeitet wie folgt. Dargestellt ist eine Stellung der Pumpaggregate, wie sie vor einem Dosierhub eingenommen wird. Die Kolben 16, 17 befinden sich in ihrer obersten Stellung. In dieser Stellung ist der zweite Kolben 17 (Dosierkolben) aus der unteren Zylinderbohrung 9 herausgezogen. Der erste Kolben 16 (Umwälzkolben) befindet sich oberhalb der seitlichen Fenster 14. Die Zylinder 9, 10 sind mit Komponentenmasse 4 bzw. 5 gefüllt. Die Füllung erfolgt durch Zuströmung entsprechend dem Pfeil 46, der in den Vorratsbehälter 1 eingezeichnet ist, d. h., die Komponentenmasse gelangt durch die Fenster 14 in die Zylinder 10 und 9.

Wenn der größtmögliche Dosierhub ausgeführt werden soll, werden die Kolbenstangen 15 über ihren gesamten möglichen Bewegungsweg nach unten bewegt, wobei der Kolben 28 innerhalb des Antriebszylinders 27 bis nahe an das untere Ende des Antriebszylinders gelangt. Hierbei wird Druckmittel über die Druckmittelleitungen 33 zugeführt und unterhalb des Kolbens 28 befindliches Druckmittel strömt über die Druckmittelleitung 34 ab. Nach einem gewissen Bewegungsweg dringt das untere Ende des Dosierkolbens 17 in die Zylinderbohrung 9 ein. Bei weiterer Abwärtsbewegung werden die Komponentenmassen 4, 5 aus den Bohrungen 9 verdrängt. Es sei angenommen, daß die Abwärtsbewegung beider Kolbenstangen 15 synchron erfolgt. Es wird nun gleichzeitig in einem bestimmten Mengenverhältnis, im dargestellten Fall im Mengenverhältnis 1 : 1,Komponentenmasse 4 und 5 in den Statikmischer 6 gedrückt, wo eine vollständige Vermischung stattfindet und dadurch aktivierte Gießmasse gebildet wird, die durch das Gießventil 45 austritt.

Nach einem gewissen Bewegungsweg des Dosierkolbens 17 innerhalb des Zylinders 9 gelangt auch der Umwälzkolben 16 in den Zylinder 10, wonach die seitlichen Fenster 14 abgeschlossen sind. Die im Zylinder 10 enthaltene Komponentenmasse wird verdrängt und durch den Kanal 18 in den Hohlraum 19 der Kolbenstange 15 gedrückt. Schließlich wird ein Teil der Komponentenmasse durch die Durchbrüche 20 herausgedrückt und breitet sich auf dem Ablaufblech 22 zu einer dünnen Schicht aus, so daß eine intensive Entgasung stattfindet. Es sei angenommen, daß die Behälter 1, 2 mittels der Vakuumpumpe 7 auf niedrigem Druck gehalten werden.

Wenn nach dem beschriebenen Dosierhub eine weitere Dosierung zunächst nicht stattfinden soll, jedoch die Komponentenmassen 4, 5 umgewälzt werden sollen, werden die Kolbenstangen 15 nur noch in einem solchen Bereich bewegt, daß die Dosierkolben 17 stets in die unteren Zylinder 9 eingetaucht bleiben. Die Umwälzkolben 16 jedoch werden so weit zurückgezogen, daß die seitlichen Fenster teilweise geöffnet werden, so daß Komponentenmasse in die Zylinder 10 einströmen kann. Ein Weiterfließen in die Bohrungen 9 jedoch ist nicht möglich, da diese ja durch die Dosierkolben 17 versperrt sind. Während eines Umwälzhubes werden die Kolben 16 bis zu ihrer untersten Stellung bewegt, wobei Komponentenmasse, wie schon im Zusammenhang mit dem Dosierhub beschrieben, in den Hohlraum 19 hineingedrückt wird und aus den Durchbrüchen 20 ausfließt.

Der obere Endschalter 30 bestimmt die oberste Stellung der Kolbenstange 15, die stets einem Dosierhub vorangeht und der untere Endschalter 31 die obere Endlage der Kolbenstange 15 während des Umwälzbetriebes.

Wenn der Mischer 6 mit nicht aktivierter Masse gespült werden soll, um zu verhindern, daß bei einer nachfolgenden Betriebsunterbrechung im Statikmischer 6 Gießmasse aushärtet, kann wie folgt vorgegangen werden. Angenommen sei, daß mit Komponentenmasse 5 gespült werden soll. Das im Vorratsbehälter 1 befindliche Pumpaggregat wird entweder auf Umwälzbetrieb geschaltet oder auch in eine Ruhelage gebracht, in der der Dosierkolben 17 in den Zylinder 9 eingetaucht ist, ohne sich dort zu bewegen. Das im Vorratsbehälter 2 befindliche Pumpaggregat wird so betrieben, daß Komponentenmasse 5 in den Statikmischer 6 gedrückt wird, wobei vorzugsweise der volle Hub zurückgelegt wird, also von der gezeichneten Ausgangslage bis zur tiefsten Stelle der Kolbenstange 15. Für eine vollständige Durchspülung können mehrere solche Hübe erforderlich sein.

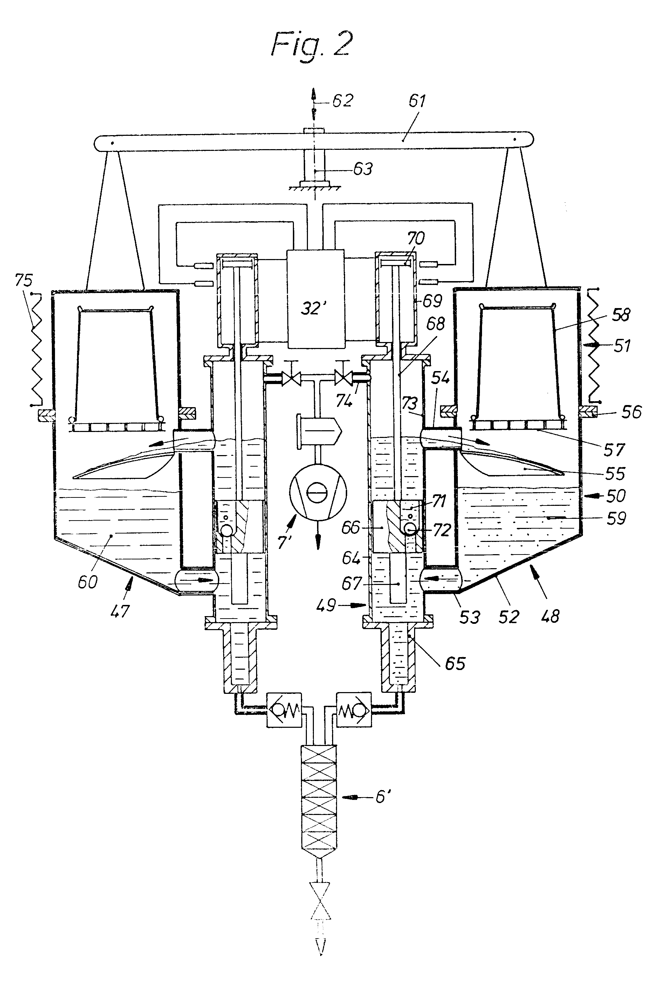

Die Ausführungsform nach Fig. 2 hat wiederum zwei Vorratsbehälter 47 und 48. Jedem Vorratsbehälter 47, 48 ist ein Pumpaggregat 49 zugeordnet, das jedoch nicht innerhalb, sondern außerhalb des zugeordneten Vorratsbehälters angeordnet ist. Die beiden Vorratsbehälter 47 und 48 und die zugeordneten Pumpaggregate 49 sind auch hier wieder gleich ausgebildet, weshalb die Beschreibung eines Behälters samt Pumpaggregat genügt.

Der Vorratsbehälter 48 hat einen Unterteil 50 und eine Deckelhaube 51. Der Behälterunterteil 50 hat einen schräg liegenden Boden 52, der zu einem seitlich am Behälter 48 angeordneten unteren Ausflußstutzen 53 hin abfällt. Im oberen Bereich des Behälterunterteiles 50 befindet sich ein Zuflußstutzen 54, der über einem Ablaufblech 55 in den Behälter 48 einmündet.

Am oberen Rand des Behälterunterteiles befindet sich ein Abdichtungsflansch 56, auf dem die Deckelhaube 51 luftdicht aufliegt. Nur wenig unterhalb des Flansches 56 ist ein Rost 57 angeordnet, der als Stütze für einen Verpackungsbehälter 58 dient, in dem Komponentenmasse 59 bzw. 60 angeliefert wurde.

Die Deckelhaube 51 ist an einem Arm 61 aufgehängt, der in Richtung des Doppelpfeiles 62 gehoben und gesenkt werden kann und um die Achse 63 schwenkbar ist, wodurch beide Deckelhauben 51 gleichzeitig abgehoben und zur Seite geschwenkt werden können.

Das Pumpaggregat 49 hat einen großen oberen Pumpzylinder 64 und einen unteren kleinen Pumpzylinder 65. In den Pumpzylinder 64 paßt ein erster Kolben 66 (Umwälzkolben) und in den kleinen Pumpzylinder 65 ein zweiter Kolben 67 (Dosierkolben). Die beiden Kolben 66, 67 sind fest miteinander verbunden und werden mittels einer Kolbenstange 68 betätigt, die in einen Antriebszylinder 69 eingreift, in dem ein Antriebskolben 70 beweglich ist.

Im Kolben 66 befindet sich ein Durchbruch 71, der mit einem Rückschlagventil 72 verschließbar ist, das eine Strömung von oben nach unten verhindert, von unten nach oben jedoch zuläßt.

Den Antriebszylindern 70 ist wieder eine Antriebseinrichtung 32' zugeordnet, von der entsprechende Leitungen ausgehen wie von der Antriebseinrichtung 32 nach Fig. 1. Auch ist eine Vakuumpumpe 7' vorgesehen, mit der die Vorratsbehälter 47, 48 evakuiert werden können, wobei die Absaugung über die Zuflußstutzen 54, Hohlräume 73 innerhalb der Pumpzylinder 64 und Leitungen 74 erfolgt. An die Pumpzylinder 65 ist wieder ein Statikmischer 6' über Leitungen mit Rückschlagventilen angeschlossen.

Die Anlage nach Fig. 2 arbeitet wie folgt. Zur Beschickung der Anlage mit Komponentenmasse 59 und 60 werden die Deckelhauben 51 abgehoben und Verpackungsbehälter 58, die Komponentenmassen 59, 60 enthalten, werden mit ihrer Öffnung nach unten auf die Roste 57 aufgestellt. Danach werden die Deckelhauben 51 wieder aufgesetzt. Dieser Vorgang kann z. B. nach Arbeitsschluß erfolgen, so daß lange Zeit zur Verfügung steht, um die, häufig zähflüssige, Komponentenmasse aus den Verpackungsbehältern 58 auströmen zu lassen. Um auch zähflüssige Massen möglichst gründlich zu entfernen, kann jedem Behälter 47, 48 eine Heizung 75 zugeordnet sein.

Gezeichnet ist auch hier die Ausgangsstellung vor einem Dosierhub, der in gleicher Weise abläuft, wie dies anhand der Fig. 1 beschrieben wurde. Wenn die Unterkante des Kolbens 66 den Ausflußstutzen 53 vollständig passiert hat, muß unterhalb des Kolbens 66 befindliche Komponentenmasse über den Durchbruch 71 durch den Kolben 66 hindurchströmen. Wenn sich der Kolben 66 wieder nach oben bewegt, wird die oberhalb des Kolbens befindliche Komponentenmasse angehoben, da ein Rückfluß durch das Ventil 72 verhindert wird. Ein Teil der oberhalb des Kolbens 66 befindlichen Komponentenmasse wird dabei bis in den Bereich des Zuflußstutzens 54 angehoben und strömt dann in den Behälter 50 über, wobei sie sich auf dem Ablaufblech 55 zu einer dünnen Schicht ausbreitet.

Auch bei dieser Anlage ist ein reiner Umwälzbetrieb möglich, bei dem der Dosierkolben 67 stets in den Zylinder 65 eingetaucht bleibt.

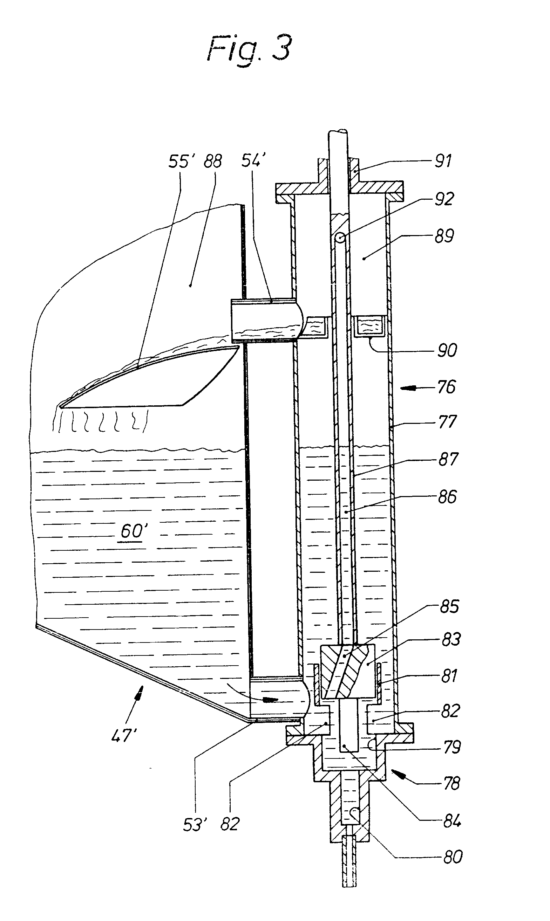

In Fig. 3 ist eine Variante für eine Anlage nach Fig. 2 dargestellt. Hierbei können die Behälter gleich ausgebildet sein wie bei der Ausführung nach Fig. 2. Der Behälter ist deshalb mit 47' bezeichnet. Das Pumpaggregat 76 jedoch hat einen anderen Aufbau. Das Pumpaggregat 76 hat ein äußeres Rohr 77, dessen Innenraum mit dem Ausflußstutzen 53' des Behälters 47' kommuniziert. An das untere Ende des Rohres 77 ist ein Pumpengehäuse 78 angeflanscht, das eine große obere Zylinderbohrung 79 und eine kleine untere Zylinderbohrung 80 enthält. Vom Pumpengehäuse erhebt sich eine Kolbenführung 81, die von seitlichen Fenstern 82 durchbrochen ist.

In der Kolbenführung 81 ist ein erster Kolben 83 (Umwälzkolben) von großem Durchmesser geführt. An den ersten Kolben 83 ist unten ein zweiter Kolben 84 (Dosierkolben) angesetzt. Der Kolben 83 paßt in den Zylinder 79 und der Kolben 84 in den Zylinder 80. Der Umwälzkolben 83 enthält einen Kanal 85, der an der Unterfläche des Umwälzkolbens 83 ausmündet und mit einem Längskanal 86 kommuniziert, der sich in einer Kolbenstange 87 befindet, an der die Kolben 83, 84 befestigt sind. Die Konstruktion des Pumpaggregates 76 stimmt also weitgehend mit der Konstruktion des Pumpaggregates 3 nach Fig. 1 überein, allerdings mit dem Unterschied, daß das Pumpaggregat 76 außerhalb des Behälters 47' angeordnet ist und deshalb von einem Rohr 77 umgeben ist. Das Rohr 77 kann gewissermaßen als Seitenraum des Behälters 47' aufgefaßt werden, da eine ständige Kommunikation zwischen den Innenräumen 88 des Behälters 47 und 89 des Rohres 77 besteht.

Im oberen Bereich des Rohres 77 befindet sich ein Zuflußstutzen 54', der den Rohr-Innenraum 89 ebenfalls mit dem Behälter-Innenraum 88 verbindet. Unterhalb des Zuflußstutzens 54 ist im Rohr 77 eine Rinne 90 angeordnet, die Komponentenmasse 60' auffängt, die durch Durchbrüche 92 aus der Kolbenstange 87 austritt. Eine Durchführung 91 für die Kolbenstange 87 ist frei von Komponentenmasse und bereitet deshalb keine Abdichtungsschwierigkeiten, was von besonderem Vorteil ist, da die Durchführung 91 vakuumdicht sein muß.

Die Umwälzung von Komponentenmasse 60 geschieht dadurch, daß diese im Kolbenstangenkanal 86 nach oben gedrückt wird, über die Durchbrüche 92 austritt und von dort in die Rinne 90 fließt. Aus der Rinne 90 gelangt die Komponentenmasse über den Zuflußstutzen 54 in den Behälter 47' wobei sie zunächst auf ein Ablaufblech 55' gelangt und sich dort zu einer dünnen Schicht ausbreitet.

Im übrigen wird die Anlage nach Fig. 3 analog betrieben wie die Anlage nach den Fig. 1 und 2.

## Patentansprüche

1. Gießanlage für die Verarbeitung von Gießharz, mit mindestens zwei, vorzugsweise evakuierbaren Vorratsbehältern (1, 2; 47, 48; 47') für Gießharzkomponenten (4, 5; 59, 60; 60'), den Vorratsbehältern (1, 2; 47, 48; 47') zugeordneten Dosierpumpen (3; 49; 76), einem den Dosierpumpen (3; 49; 76) nachgeordneten Mischer (6; 6') und Umwälzeinrichtungen (10, 16; 64, 66; 83; 79) zum Umwälzen der Gießharzkomponenten (4, 5; 59, 60; 60') in den Vorratsbehältern (1, 2; 47, 48; 47'), wobei die Umwälzpumpe (16, 10; 66, 64; 83, 79) in einen Umwälzkreislauf (19, 20, 14; 71, 54, 53; 86, 92, 54') des zugeordneten Vorratsbehälters (1, 2; 47, 48; 47') eingebaut ist, dadurch gekennzeichnet, daß mindestens einem Vorratsbehälter (1, 2; 47, 48; 47') ein Pumpaggregat (3; 49; 76) zugeordnet ist, das eine Kolbenstange (15; 68; 87) aufweist, auf der ein erster Kolben (16; 66; 83) einer Umwälzpumpe (10, 16; 64, 66; 83; 79) und ein zweiter Kolben (17; 67; 84) einer Dosierpumpe (17, 9; 67, 65; 84, 80) sitzt, daß alle Pumpaggregate (3; 49; 76) über eine Antriebsvorrichtung (32; 32') betätigbar sind, die derart ausgelegt ist, daß die Förderbewegung der Kolbenstangen (15; 68; 87) synchron erfolgt, und daß der Mischer (6; 6') als Durchlaufmischer ausgelegt ist.

2. Gießanlage nach Anspruch 1, dadurch gekennzeichnet, daß das Pumpaggregat (3) im Inneren des ihm zugeordneten Vorratsbehälters (1, 2) angeordnet ist (Fig. 1).

3. Gießanlage nach Anspruch 1, dadurch gekennzeichnet, daß das Pumpaggregat (49; 76) außerhalb des ihm zugeordneten Vorratsbehälters (47, 48; 47') angeordnet ist.

4. Gießanlage nach einem der vorhergehenden Ansprüche, dadurch gekennzeichnet, daß mehrere Pumpaggregate (3; 49; 76) synchron betätigbar sind, z. B. mittels einer mechanischen oder hydraulischen Antriebsvorrichtung (32; 32'), und wobei der Durchlaufmischer als Statikmischer (6; 6'), ausgebildet ist.

5. Gießanlage nach einem der vorhergehenden Ansprüche, dadurch gekennzeichnet, daß der zweite Kolben (17; 67; 84) in eine untere Zylinderbohrung (9; 65; 80) eingreift und zur Freigabe einer Füllöffnung für die Zylinderbohrung (9; 65; 80) aus dieser herausziehbar ist, wobei der zweite Kolben (17; 67; 84) während Hin- und Herbewegungen der Kolbenstange (15; 68; 87) zum Zwecke des Umwälzens dauernd dichtend in die untere Zylinderbohrung (9; 65; 80) eingreift und der erste Kolben (16; 66; 83) in einer oberen Zylinderbohrung (10; 64; 79) beweglich ist, wobei der erste (16; 66; 83) und der zweite Kolben (17; 67; 84) relativ zueinander feststehend und der Hub der Kolbenstange (15; 68; 87) veränderlich ist, wobei die Kolbenstange (15; 68; 87) während eines Umwälzhubes zwischen einer untersten Stellung und einer Zwischenstellung bewegbar ist und wobei die Kolbenstange (15; 68; 87) in eine Füllstellung anhebbar ist, die höher liegt als die Zwischenstellung und in der der zweite Kolben (17; 67; 84) aus der unteren Zylinderbohrung (9; 65; 80) herausgezogen ist und wobei die Kolbenstange (15; 68; 87) ausgehend von der Füllstellung zunächst über einen Schließhub abwärts bewegbar ist, an dessen Ende der zweite Kolben (17; 67; 84) dichtend in die Zylinderbohrung (9; 65; 80) eingreift, wobei die Kolbenstange (15; 68; 87) längs eines eventuell einstellbaren Dosierhubes weiter abwärts in eine den Dosierhub begrenzende Dosier-Endstellung bewegbar ist.

6. Gießanlage nach Anspruch 5, dadurch gekennzeichnet, daß der erste Kolben (16; 66; 83) einen Kolbendurchbruch (18; 71; 85) aufweist und während des Förderhubes Masse (4, 5; 59, 60; 60') durch den Durchbruch (18; 71; 85) gedrückt wird.

7. Gießanlage nach Anspruch 6, dadurch gekennzeichnet, daß die Kolbenstange (15; 87) hohl ausgebildet ist und der Kolbendurchbruch (18; 85) mit dem Hohlraum (19; 86) der Kolbenstange (15; 87) kommuniziert, wobei der Hohlraum (19; 86) in einem oberen Bereich mit dem Inneren (21; 88) des Vorratsbehälters (1, 2; 47') über mindestens eine seitliche Kolbenstangenöffnung (20; 92) kommuniziert.

8. Gießanlage nach Anspruch 7, dadurch gekennzeichnet, daß bei einem außerhalb des Behälters angeordneten Pumpaggregat (76) unterhalb der Kolbenstangenöffnung (92), jedoch oberhalb des Massespiegels im Vorratsbehälter (47') eine Auffangrinne (90) in einem die Kolbenstange (87) umgebenden Rohr (77) angeordnet ist, die über eine Verbindungsleitung (54') mit dem Inneren des Vorratsbehälters (47') verbunden ist (Fig. 3).

9. Gießanlage nach Anspruch 6, dadurch gekennzeichnet, daß im Kolbendurchbruch (71) ein Rückschlagventil (72) angeordnet ist und die Masse im Pumpzylinder (64) des ersten Kolbens (66) nach oben bis auf ein Niveau oberhalb des Massespiegels gefördert wird, wo der genannte Pumpzylinder (64) mit dem Inneren des Vorratsbehälters (47, 48) verbunden ist.

10. Gießanlage nach einem der vorhergehenden Ansprüche, dadurch gekennzeichnet, daß in mindestens einem Vorratsbehälter (1, 2; 47, 48; 47') über dem Massespiegel Mittel zur Ausbreitung der Masse (4, 5; 59, 60; 60') zu einer dünnen Schicht, z. B. Ablaufflächen (22; 55; 55'), angeordnet sind.

11. Gießanlage nach einem der vorhergehenden Ansprüche, dadurch gekennzeichnet, daß die Vorratsbehälter (1, 2; 47, 48; 47') zu ihren unteren Auslauföffnungen (53; 53') hin abfallende Böden (2b; 52) aufweisen, die bei extern angeordneten Pumpaggregaten (49; 76) vorzugsweise zu einer seitlichen Behälteröffnung (53; 53') hin abfallen.

12. Gießanlage nach einem der vorhergehenden Ansprüche, dadurch gekennzeichnet, daß in den Vorratsbehältern (47, 48) Stützen (57) für Masse-Verpackungsbehälter (58) angeordnet sind.

13. Gießanlage nach Anspruch 12, dadurch gekennzeichnet, daß die Stützen (57) als Roste ausgebildet sind.

14. Gießanlage nach einem der Ansprüche 12 und 13, dadurch gekennzeichnet, daß die Vorratsbehälter (47, 48) haubenförmige Deckel (51) aufweisen und die Stützen (57) in der Trennebene (56) oder in der Nähe der Trennebene zwischen Behälterunterteil (50) und Deckel (51) angeordnet sind.

15. Gießanlage nach einem der vorhergehenden Ansprüche, dadurch gekennzeichnet, daß die Deckel (51) der Vorratsbehälter (47, 48) an hebbaren und schwenkbaren Armen (61) aufgehängt sind, bei zwei Vorratsbehältern (47, 48) z. B. an einem geraden Arm (61), der um eine zwischen den Behältern (47, 48) liegende Achse (63) schwenkbar ist.

16. Gießanlage nach einem der Ansprüche 12 bis 15, dadurch gekennzeichnet, daß im Bereich oberhalb der Stützen (57) für die Verpackungsbehälter (58) eine Heizeinrichtung (75) vorgesehen ist.

17. Gießanlage nach einem der vorhergehenden Ansprüche, dadurch gekennzeichnet, daß mehrere Pumpaggregate (3; 49; 76,) individuell steuerbar sind, insbesondere so, daß nur ein Pumpaggregat (3; 49; 76) Masse (4 bzw. 5; 59 bzw. 60) zum Mischer (6; 6') fördert.

## Claims

1. Casting apparatus for processing cast resin, having at least two preferably evacuable storage containers (1, 2; 47, 48; 47') for cast-resin components (4, 5; 59, 60; 60'), metering pumps (3; 49; 76) associated with the storage containers (1, 2; 47, 48; 47'), a mixer (6; 6') arranged downstream of the metering pumps (3; 49; 76) and circulating devices (10, 16; 64, 66; 83; 79) for circulating the cast-resin components (4, 5; 59, 60; 60') in the storage containers (1, 2; 47, 48; 47'), the circulating pump (16, 10; 66, 64; 83, 79) being fitted in a circulating circuit (19, 20, 14; 71, 54, 53; 86, 92, 54') of the associated storage container (1, 2; 47, 48; 47'), characterized in that at least one storage container (1, 2; 47, 48; 47') has associated with it a pump unit (3; 49; 76) comprising a piston rod (15; 68; 87) on which are mounted a first piston (16; 66; 83) of a circulating pump (10, 16; 64, 66; 83; 79) and a second piston (17; 67; 84) of a metering pump (17, 9; 67, 65; 84, 80), all the pump units (3; 49; 76) are actuable by way of a drive device (32; 32') designed in such a way that the conveying movement of the piston rods (15; 68; 87) takes place synchronously, and the mixer (6; 6') is designed as a continuous mixer.

2. Casting apparatus according to Claim 1, characterized in that the pump unit (3) is arranged in the interior of the storage container (1, 2) associated therewith (Fig. 1).

3. Casting apparatus according to Claim 1, characterized in that the pump unit (49; 76) is arranged outside the storage container (47, 48; 47') associated therewith.

4. Casting apparatus according to one of the preceding Claims, characterized in that a plurality of pump units (3; 49: 76) are actuable synchronously, for example by means of a mechanical or hydraulic drive device (32; 32'), and the continuous mixer being designed as a static mixer (6; 6').

5. Casting apparatus according to one of the preceding Claims, characterized in that second piston (17; 67; 84) engages in a lower cylinder bore (9; 65; 80) and is withdrawable therefrom to free a filling opening for the cylinder bore (9; 65; 80), the second piston (17; 67; 84) engaging in the lower cylinder bore (9; 65; 80) during reciprocating movements of the piston rod (15; 68; 87) for circulation in a continuously sealing manner and the first piston (16; 66; 83) being movable in an upper cylinder bore (10; 64; 79), the first (16; 66; 83) and the second piston (17; 67; 84) being fixed with respect to each other and the stroke of the piston rod (15; 68; 87) being variable, the piston red (15; 68; 87) being movable between a bottom position and an intermediate position during a circulating stroke and the piston rod (15; 68; 87) being liftable into a filling position which is higher than the intermediate position and in which the second piston (17; 67; 84) is withdrawn from the lower cylinder bore (9; 65; 80), and the piston rod (15; 68; 87) being movable downwards starting from the filling position initially by way of a closure stroke, at the end of which the second piston (17; 67; 84) engages in the cylinder bore (9; 65; 80) in a sealing manner, the piston rod (15; 68; 87) being movable further downwards along a metering stroke - possibly adjustable - into a metering end position defining the metering stroke.

6. Casting apparatus according to Claim 5, characterized in that the first piston (16; 66; 83) has a piston aperture (18; 71; 85) and, during the conveying stroke, compound (4, 5; 59, 60; 60') is pressed through the aperture (18; 71; 85).

7. Casting apparatus according to Claim 6, characterized in that the piston rod (15; 87) is made hollow and the piston aperture (18; 85) communicates with the cavity (19; 86) of the piston rod (15; 87), the cavity (19; 86) communicating in an upper area with the interior (21; 88) of the storage container (1, 2; 47') by way of at least one lateral piston-rod opening (20; 92).

8. Casting apparatus according to Claim 7, characterized in that in the case of a pump unit (76) arranged outside the container, below the piston-rod opening (92) but above the level of the compound in the storage container (47') a collecting channel (90) is arranged in a tube (77) surrounding the piston rod (87) and connected by way of a connexion line (54') to the interior of the storage container (47') (Fig. 3).

9. Casting apparatus according to Claim 6, characterized in that a non-return valve (72) is arranged in the piston aperture (71) and the compound in the pump cylinder (64) of the first piston (66) is conveyed upwards to a level above the level of the compound, where the said pump cylinder (64) is connected to the interior of the storage container (47, 48).

10. Casting apparatus according to one of the preceding Claims, characterized in that means for spreading the compound (4, 5; 59, 60; 60') into a thin layer, for example run-off surfaces (22; 55; 55'), are arranged in at least one storage container (1, 2; 47, 48; 47') above the level of the compound.

11. Casting apparatus according to one of the preceding Claims, characterized in that the storage containers (1, 2; 47, 48; 47') have bases (2b; 52) sloping towards their lower run-off openings (53; 53') and, in the case of pump units (49; 76) arranged externally, preferably sloping towards a lateral container opening (53; 53').

12. Casting apparatus according to one of the preceding Claims, characterized in that supports (57) for compound packaging containers (58) are arranged in the storage containers (47, 48).

13. Casting apparatus according to Claim 12, characterized in that the supports (57) are constructed as grilles.

14. Casting apparatus according to one of Claims 12 and 13, characterized in that the storage containers (47, 48) have hood-shaped covers (51) and the supports (57) are arranged in the separation plane (56) or in the vicinity of the separation plane between the lower part and the cover (51) of the containers (50).

15. Casting apparatus according to one of the preceding Claims, characterized in that the covers (51) of the storage containers (47, 48) are suspended on liftable and pivotable arms (61), in two storage containers (47, 48) for example on a straight arm (61) pivotable about an axis (63) situated between the containers (47, 48).

16. Casting apparatus according to one of Claims 12 to 15, characterized in that a heating device (75) is provided in the region above the supports (57) for the packaging containers (58).

17. Casting apparatus according to one of the preceding Claims, characterized in that a plurality of pump units (3; 49: 76) are controllable individually, in particular in such a way that only one pump unit (3; 49; 76) conveys compound (4 and 5 respectively; 59 and 60 respectively) to the mixer (6; 6').

## Revendications

1. Dispositif de coulage pour traitement de résine, comportant au moins deux récipients de stockage (1, 2; 47, 48 ; 47'), de préférence vidangeables, pour des composants de résine de coulée (4, 5; 59, 60; 60'), des pompes de dosage (3; 49; 76) associées aux récipients de stockage (1, 2; 47, 48; 47'), un mélangeur (6, 6') placé en aval des pompes de dosage (3; 49; 76) et des dispositifs de circulation (10, 16; 64, 66; 83, 79) pour faire circuler les composants de résine de coulée (4, 5; 59, 60; 60') dans les récipients de stockage (1, 2; 47, 48; 47'), étant entendu que les pompes de circulation (16, 10; 66, 64; 83, 79) sont installées dans un circuit de recyclage du récipient de stockage associé (1, 2; 47, 48; 47'),
caractérisé en ce qu'au moins à un récipient de stockage (1, 2; 47, 48; 47'), est associée une unité de pompage (3; 49; 76) comportant une tige de piston (15; 68; 87), sur laquelle sont placés un premier piston (16; 66; 83) d'une pompe de circulation (10, 16; 64, 66; 83, 79) et un deuxième piston d'une pompe de dosage (17, 9; 67, 65; 84, 80),
en ce que toutes les unités de pompage (3; 49; 76) peuvent être actionnées au moyen d'un dispositif d'entraînement (32; 32'), conçu de telle façon que le déplacement des tiges de piston (15; 68; 87) se fasse de façon synchronisée,
et en ce que le mélangeur (6; 6') est réalisé sous la forme d'un mélangeur à passage.

2. Dispositif de coulage suivant la revendication 1, caractérisé en ce que l'unité de pompage (3) est disposée à l'intérieur du récipient de stockage (1, 2) qui lui est associé (figure 1).

3. Dispositif de coulage suivant la revendication 1, caractérisé en ce que l'unité de pompage (49; 76) est disposée à l'extérieur du récipient de stockage (47, 48; 47') qui lui est associé.

4. Dispositif de coulage suivant l'une quelconque des revendications précédentes, caractérisé en ce que plusieurs unités de pompage (3; 49; 76) peuvent être actionnées de façon synchronisée, par exemple au moyen d'un dispositif d'entraînement (32; 32') mécanique ou hydraulique, et étant entendu que le mélangeur à passage est réalisé sous la forme d'un mélangeur statique (6, 6').

5. Dispositif de coulage suivant l'une quelconque des revendications précédentes, caractérisé en ce que le deuxième piston (17; 67; 84) s'enfonce dans un alésage cylindrique inférieur (9; 65; 80) et peut en sortir pour libérer un orifice de remplissage de l'alésage cylindrique (9; 65; 80), étant entendu que :
- le deuxième piston (17; 67; 80), pendant l'aller et le retour de la tige de piston (15; 68; 87) pour effectuer le transfert, se déplace de façon constamment étanche dans l'alésage cylindrique inférieur (9; 65; 80), et que le premier piston (16; 66; 83) peut se déplacer dans un alésage cylindrique supérieur (10; 64; 79),
- le premier (16; 66; 83) et le deuxième piston (17; 67; 84) sont fixes l'un par rapport à l'autre et que la course de la tige de piston (15; 68; 87) peut être modifiée,
- la tige de piston (15; 68; 87) peut se déplacer, pendant une course de transfert, entre une position inférieure et une position intermédiaire,
- la tige de piston (15; 68; 87) peut être soulevée puisque dans une position de remplissage, qui est située plus haut que la position intermédiaire, et dans laquelle le deuxième piston (17; 67; 84) est sorti de l'alésage cylindrique inférieur(9; 65; 80)
- la tige de piston (15; 68; 87) peut d'abord se déplacer, en quittant la position de remplissage, vers le bas suivant une course de fermeture, à l'extrémité de laquelle le deuxième piston (17; 67; 84) s'enfonce, en faisant étanchéité, dans l'alésage cylindrique (9; 65; 80),
- et la tige de piston (15; 68; 87) peut, en suivant une course de dosage éventuellement réglable, continuer à se déplacer vers le bas jusqu'à une position finale de dosage qui limite la course de dosage.

6. Dispositif de coulage suivant la revendication 5, caractérisé en ce que le premier piston (16; 66; 83) présente un orifice de passage (18; 71; 85) et que la masse de produit (4, 5; 59, 60; 60') est poussée au travers de l'orifice de passage (18; 71; 85) du piston, pendant sa course de transfert.

7. Dispositif de coulage suivant la revendication 6, caractérisé en ce que la tige de piston (15; 87) est creuse et que l'orifice de passage (18; 85) du piston communique avec l'espace intérieur (19; 86) de la tige de piston (15; 87), étant entendu que cet espace intérieur (19; 86) communique, dans une zone supérieure, avec l'intérieur (21; 88) du récipient de stockage (1, 2; 47') par au moins une ouverture latérale (20; 92) de la tige de piston.

8. Dispositif de coulage suivant la revendication 7, caractérisé en ce que, dans le cas d'une unité de pompage (76) disposée en dehors du récipient, une goulotte de collecte (90) est disposée dans un tube (77) entourant la tige de piston (87), en-dessous de l'ouverture ( 92) de la tige de piston, mais au-dessus du niveau de la masse de produit se trouvant dans le récipient de stockage (47'), ce tube (77) étant relié, par l'intermédiaire d'une conduite de raccordement (54'), à l'intérieur du récipient de stockage (47').

9. Dispositif de coulage suivant la revendication 6, caractérisé en ce que, dans l'orifice de passage (71) du piston, est disposé un clapet anti-retour (72) et que la masse de produit se trouvant dans le cylindre de pompe (64) du premier piston (66) est transportée vers le haut jusqu'à une hauteur située au-dessus du niveau de la masse de produit, là où ledit cylindre de pompe (64) est relié à l'intérieur du récipient de stockage (47, 48).

10. Dispositif de coulage suivant l'une quelconque des revendications précédentes, caractérisé en ce que, dans au moins l'un des récipients de stockage (1, 2; 47, 48; 47'), au-dessus du niveau de la masse de produit, sont disposés des moyens, par exemple des surfaces d'écoulement (22; 55; 55'), destinés à l'étalement de la masse de produit (4, 5; 59, 60; 60') en une fine couche.

11. Dispositif de coulage suivant l'une quelconque des revendications précédentes, caractérisé en ce que les récipients de stockage (1, 2; 47, 48; 47') présentent des fonds en pente (2b; 52), dirigés vers leur orifice d'évacuation inférieur (53; 53'), fonds qui, dans le cas d'unités de pompage (49; 76) extérieures, sont inclinés, de préférence, vers un orifice latéral du récipient (53; 53').

12. Dispositif de coulage suivant l'une quelconque des revendications précédentes, caractérisé en ce que, dans les récipients de stockage (47, 48), sont disposées des appuis (57) pour des récipients d'empaquetage de la masse de produit.

13. Dispositif de coulage suivant la revendication 12, caractérisé en ce que les appuis (57) sont réalisés sous la forme de grilles.

14. Dispositif de coulage suivant la revendication 12 ou la revendication 13, caractérisé en ce que les récipients de stockage (47, 48) présentent des couvercles (51) en forme de dôme et en ce que les appuis (57) sont disposés dans le plan de séparation (56), ou au voisinage du plan de séparation, entre la partie inférieure (50) du récipient et le couvercle (51).

15. Dispositif de coulage suivant l'une quelconque des revendications précédentes, caractérisé en ce que les couvercles (51) des récipients de stockage (47, 48) sont suspendus à des bras (61) pouvant se soulever et pivoter, par exemple, dans le cas de deux récipients de stockage (47, 48), à un bras (61) rectiligne, pouvant pivoter sur un axe (63) placé entre les récipients (47, 48).

16. Dispositif de coulage suivant l'une quelconque des revendications 12 à 15, caractérisé en ce que, dans la zone située au-dessus des appuis (57) pour les récipients d'empaquetage (58), il est prévu un dispositif de chauffage (75).

17. Dispositif de coulage suivant l'une quelconque des revendications précédentes, caractérisé en ce que plusieures unités de pompage (3; 49; 76) peuvent être commandées individuellement, en particulier de telle façon qu'une seule unité de pompage (3; 49; 76) envoie la masse de produit (respectivement 4 ou 5; 59 ou 60) au mélangeur (6, 6').
